# EUROPEAN PATENT APPLICATION

(11) **EP 4 455 081 A1**
(43) Date of publication of application: **30.10.2024**
(21) Application number: 24382268.1
(22) Date of filing: 13.03.2024
(51) Int. Cl.: C01B 25/45, H01M 4/00, H01M 10/00, H01M 4/58, H01M 10/0525

(54) **INDUSTRIAL PROCEDURE FOR OBTAINING IRON-LITHIUM PHOSPHATE**

(30) Priority: 13.04.2023 ES 202330296
(71) Applicant: De la Cámara Delgado, María de las Mercedes, 09500 Medina de Pomar Burgos (ES)
(72) Inventor: De la Cámara Delgado, María de las Mercedes, 09500 Medina de Pomar Burgos (ES)
(74) Representative: Sahuquillo Huerta, Jesús

(57) **Abstract**

The industrial LiFePO4/C production process of the invention uses iron phosphate (FePO4) and lithium carbonate (Li2CO3), as primary precursors, and nanoparticles of natural carbohydrates selected from isomaltose, galactose, sucrose, fructose or glucose, as secondary precursors or doping additives of carbon, as well as an excipient selected from cytochrome nanoparticles (Cu/Fe) immobilized glucose oxidase (GOx) nanoparticles (C6H12O7) immobilized, immobilized glucose dehydrogenase (GDH) nanoparticles or polyethylene oxide-polybutylene terephthalate block copolymer nanoparticles (PEO-b-PBT), also referred to here as BCP, carbon nanofibers (CNF), carbon sulfate manganese or combinations thereof, the entire production process being controlled production of the invention through IIoT - Industrial Internet of Things.

## Description

The present invention refers to an industrial process for obtaining
lithium iron phosphate as a cathode material for batteries, as well as to the system and equipment that allows this process to be carried out.

More specifically, the invention refers to an industrial process for the production of lithium iron phosphate as the cathode material of lithium ion batteries, also called here LiFePO4/C, providing operation methods, systems and equipment for the safe, efficient and environmentally responsible production of LiFePO4/C ensuring local environmental safety, as well as low production energy consumption.

The industrial LiFePO4/C production process of the invention uses phosphorus phosphate. iron (FePO4) and lithium carbonate (Li2CO3), as primary precursors, and nanoparticles of natural carbohydrates selected from isomaltose, galactose, sucrose, fructose or glucose, as secondary precursors or doping additives of carbon, as well as an excipient selected from cytochrome nanoparticles (Cu/Fe) immobilized glucose oxidase (GOx) nanoparticles (C6H12O7) immobilized, immobilized glucose dehydrogenase (GDH) nanoparticles or polyethylene oxide-polybutylene terephthalate block copolymer nanoparticles (PEO-b-PBT), also referred to here as BCP, carbon nanofibers (CNF), carbon sulfate manganese or combinations thereof, these additives acting as binders and stabilizers, favoring the dispersion of the precursors and the conductivity of the final product LiFePO4/C, the entire production process of the invention being controlled through IloT - Industrial Internet of Things (hereinafter IIoT), through sensors, measuring instruments and autonomous devices connected through Internet, thus allowing data to be collected, transmitted securely, performed analysis and optimized production, increasing efficiency and reducing costs of the production process. The process of the invention improves efficiency by more than 15% compared to cells without nanoparticles, the capacity retention rate exceeds 95% 30 and increases the useful life by more than 55%. Thus, the present invention provides a product that improves the conductivity in LiFePO4 battery cells and extends the number of cycles and, therefore, their useful life. Lithium ion batteries are in great demand due to technological advances in the electronics industry, so it is crucial to expand the supply chain of batteries and improve its electrochemical performance. Carbon materials are used to increase the cyclic stability and specific capacity of the cathode materials, which are essentials for batteries. LiFePO4 (LFP) cathodes are safe and have a
long life cycle. However, the conventional LFP cathode has a
low inherent conductivity, so adding a carbon nanomaterial influences significantly in its functionality from the electrochemical point of view (Ramasubramanian, B.; Sundarrajan, S.; Chellappan, V.; Reddy, MV; Ramakrishna, S.; Zaghib, K. Recent Development in Carbon-LiFePO4 Cathodes for Lithium-Ion Batteries: A Mini Review. Batteries 2022, 8, 133. https://doi.org/10.3390/batteries8100133).

Document CN110098406 describes a method for preparing LiFePO4 that
It includes the steps of: formulating a source of divalent iron, dopant and water in a solution of ferrous sulfate doped with titanium, magnesium, vanadium or manganese and formulate the phosphorus source and water into a phosphorus source solution; mix and make react both solutions with an oxidant selected from hydrogen peroxide
and/or peracetic acid and a precipitant selected from ammonia, sodium hydroxide and/or urea, obtaining a sludge that is subsequently filtered, washed and dried to obtain a doped iron phosphate dihydrate powder, which is mixed with cerium oxide, titanium dioxide or boric acid, then eliminating the water of crystallization to
obtain a single crystal of anhydrous doped iron phosphate. The latter dissolves into water together with a carbon source and a lithium salt to obtain a precursor mud, which is dried, granulated and sintered to obtain a lithium iron phosphate.

EP2349925 describes a procedure for the production of LiFePO4 powder that comprises the steps of: a) providing an aqueous solution of an organic surfactant; b) provide an aqueous solution of an iron (II) salt and mix said aqueous solution of iron (II) salt with an aqueous solution of a phosphate, to obtain a mixed iron (II) salt/phosphate solution with a stoichiometric Fe2+:phosphate ratio of approximately 1:1; c) adding the mixed iron (II) salt/ phosphate solution to the surfactant solution under constant stirring; d) providing an aqueous solution comprising a lithium salt, adding said aqueous solution comprising a lithium salt to said
mixed iron (II) salt/phosphate solution to obtain a mixture with a stoichiometric Fe2+:phosphate:lithium salt ratio of approximately 1:1:3 and stir the resulting mixture; e) heat the resulting mixture to 80-200°C; f) wash the resulting precipitate to eliminate excess surfactant, filter and dry the precipitate; and g) treat thermally dried the precipitate under an inert atmosphere at 550-850°C for at least 2 hours, adding a cosolvent during or after any of steps (a) a (d).

As previously indicated, in a first aspect, the invention provides a industrial process of producing lithium iron phosphate from iron phosphate (FePO4) in its forms and lithium carbonate (Li2CO3), as precursors primary, nanoparticles of natural carbohydrates selected from isomaltose,
galactose, sucrose, fructose or glucose, as secondary precursors or additives carbon dopants, as well as an excipient selected from nanoparticles of immobilized cytochrome (Cu/Fe), glucose oxidase (GOx) nanoparticles immobilized, immobilized glucose dehydrogenase (GDH) nanoparticles or polyethylene oxide-polybutylene terephthalate block copolymer nanoparticles (PEO-b-PBT), also referred to here as BCP, carbon nanofibers (CNF), carbon sulfate manganese (MnSO4) or combinations thereof, these additives acting as binders and stabilizers and favoring the dispersion of the precursors, being controlled the entire production process of the invention through IloT - Internet Industrial of Things (hereinafter IloT), through sensors, measuring instruments and autonomous devices connected through the Internet, thus allowing the collection data, perform analysis and optimize production, increasing efficiency and reducing the costs of the production process

Thus, the invention process consists of the following stages:
Yo. Demagnetization pretreatment of the primary precursors, iron phosphate (FePO4) and lithium carbonate (Li2CO3), of the secondary precursors,
   nanoparticles of natural carbohydrates selected from isomaltose, galactose, sucrose, fructose or glucose, and of the excipients, immobilized cytochrome (Cu/Fe) nanoparticles, immobilized glucose oxidase (GOx) nanoparticles, immobilized glucose dehydrogenase (GDH) nanoparticles or nanoparticles of polyethylene oxide-polybutylene terephthalate block copolymer (PEO-b-PBT), carbon nanofibers (CNF), manganese sulfate (MnSO4) or their combinations;
ii. Feeding the primary precursors, secondary precursors and excipients in powder form to a dispersion equipment along with a continuous flow of purified water
   to obtain a slurry of homogenized particles, maintaining the temperature between 60 °C and 70 °C to avoid degradation, for 60-90 minutes, at 1,000-1,500 rpm; this feeding stage being controlled by an IIoT system that adjusts the input flows of precursors and water purified to the disperser, it measures the weight proportions of the sludge, its homogeneity, temperature and pressure, and turbulence of the equipment in each moment;
iii. Mechanical crushing of the resulting sludge in two successive grinding phases:
   coarse grinding to obtain a particle size of 1-10 µm and grinding fine to obtain a particle size of 100-200 nm; controlling the stage crushing through an IIoT system that manages sludge flows pulverized, states of the crushing equipment, balancing of material grinding or particle size;
iv. Demagnetization, spray drying of fine sludge and demagnetization;
   This stage is controlled by an IIoT system that manages and optimizes each moment, the desired evaporation capacity and quality, the speed of entry of sludge, hot air and suspended dust and the level of final demagnetization of the spray drying process;
v. Sintering through a first heating for 4-6 hours, eliminating
   the excipients that help dispersion and the appearance of the first bridges or necks between doping particles and improving electronic conductivity,
   a second heating at 750 °C for 8-10 hours, producing the union
      of compacted particles by diffusion in the solid state, the inter-particle necks grow so that the particles lose their individuality and form
      a network of connected pores, and finally cooling for 6-8 hours;
   This stage is controlled by an IIoT system that manages the
      temperatures, the residence time of the particles at each temperature, the state and evolution of formation of the LiFePO4/C granules and gas emission.
   saw. Sieving and grinding to a size of 1-12 µm using grinding equipment that has appropriate switches, safety and breathing valves and managed by an IIoT system that controls, at all times, the grinding parameters, temperature, flow rate of dust, the size and surface structure of the particles; as well as the state of the equipment components.
vii. Mixed under an inert atmosphere until the degree of homogeneity and purity is achieved. desired, magnetic treatment and final sieving; controlling this stage through an IIoT system that manages, at all times, the status and evolution of the mixing operation, granularity, homogeneity and magnetization of the product, the state of the equipment.

In one embodiment of the process of the invention, the precursors primary, secondary and excipients are fed in stage ii) of the process before described in proportions shown in the following Table 1, with respect to the total weight of the input product (precursors + excipients)

| | % in weigh | Size |
|---|---|---|
| Primary precursors: | 74-75 | |
| FePO4 | | |
| Li2CO3 | | |
| Secondary precursors: | 17-18 | |
| nanoparticles of isomaltose, galactose, sucrose, fructose or glucose | 6-7 | |
| Excipients: | | |
| cytochrome nanoparticles (Cu/Fe) | | |
| immobilized, nanoparticles | 0.5 - 1 | 50-200nm |
| immobilized glucose oxidase (GOx), | | |
| immobilized of glucose dehydrogenase (GDH) nanoparticles, PEO-b-PBT (BCP) nanoparticles, nanofibers CNF, MnSO4 or their combinations | | 10-100nm |

In a preferred embodiment, the secondary precursor used consists of isomaltose nanoparticles and the excipient used is a combination of immobilized cytochrome (Cu/Fe) nanoparticles, immobilized glucose oxidase (GOx) nanoparticles or PEO-b-PBT and MnSO4 with size between 10-100 nm.

This embodiment is preferred, in particular, because the nanoparticles of immobilized cytochrome (Cu/Fe), glucose oxidase (GOx) nanoparticles immobilized or BCP act as a porous material that resolves and improves the conductivity of electrons and the mobility of Li+ ions . Not like others methods that use block copolymers in post-production stages of LiFePO4/C for the production of LiFePO4/C battery cells, herein embodiment invention is preferred, in particular, because the nanoparticles of immobilized cytochrome (Cu/Fe), glucose oxidase (GOx) nanoparticles immobilized or BCP block copolymer is used as input excipient, improving the structure of the final product.

The incorporation of immobilized cytochrome (Cu/Fe) nanoparticles, immobilized glucose oxidase (GOx) (C6H12O7) nanoparticles or immobilized glucose dehydrogenase (GDH), which act as conducting agents of electrons, improve the efficiency of the cell while allowing, through the
application of a high intensity magnetic field (7 Tesla), restructuring the crystalline structure of the cathode material LiFePO4/C controlled by the IIoT System (Zhang, X., Wang, Y., Li, X., Liu, L., Wang, C., & Xie, H. (2019). Improving the Electrochemical Performance of LiFePO4/C Cathode by Introducing Fe/Cu Bimetallic Catalyst. Journal of The Electrochemical Society, 166(10), A2028-A2033; Wu, X., Wang, X., Zhang, Y., Liu, Y., & He, X. (2019). Improved electrochemical performance of LiFePO4/C cathode by glucose oxidase modification. Journal of Power Sources, 428, 73-80; Zhang, Y., Wang, X., Wu, X., Liu, Y., & He, X. (2021). Synergistic Effect of Glucose Oxidase and Carbon Coating on LiFePO4/C Cathode for Lithium-ion Batteries.

Electrochimica Acta, 381, 138684; Zhou, X., Li, S., Huang, Y., Wang, Y., Li, H., Wang, 25 X., & Liu, X. (2018). Synergistic effect of glycerol diphosphate and ethylene carbonate in improving the electrochemical performance of LiFePO4/C cathode materials. Journal of Alloys and Compounds, 735, 1886-1893).

The result of the process of the invention is a battery grade LiFePO4/C powder, with a Li content of 4-4.5%, 34-36% Fe, 19-21% P, 1.3 ±0.2% C,
Cu < 0.005 %/Mn < 0.005 %, H2O (ppm) ÿ 1,000 and with a particle size distribution (expressed as average diameter D of the indicated percentage of particles xx, Dxx) D95 < 10 µm, D50 2-6 µm , D10 <1.5 µm.

As is known in the art, all process steps are carried out by
means of feeding, transporting and collecting, such as hoppers, lines of feeding, pipes, valves, pumps, weight sensors, temperature sensors, pressure, power and flow composition, state of filters, mills, etc., depending of the specific operation carried out in each stage of the invention process.

As indicated, all process stages are controlled by a
IloT control system that allows, in addition to what is indicated for each process stage, the control of raw materials from the entrance to the plant, during processing and composition of the LiFePO4/C product in transit to its destination, improves effectiveness

in the arrival operation of the precursors, in each operation it verifies the parameters, collects data and adjusts values according to established protocol and, if necessary, set an alarm. Thus, the final product has everything associated its life cycle and quality certificate until its destination.

Thus, in a second aspect, the invention provides a system for carrying out the process of the invention where, for each stage of the process described above, a module control system associated with corresponding physical detection elements defines and controls the input and output parameters of the data collected by said elements of detection and sends them to a data processing station associated with each stage of process, with all data stations associated with a master station
capable of making decisions and giving responses according to the state of each stage of process, assessing the need to modify, restore or respond to certain events, all through standard communication protocols of the industry, including connectivity methods that use frequencies in the ISM band 4.33GHz, 5GHz and 2.4Ghz.

### Examples

The invention is now illustrated based on an example of its embodiment for a
5,000 tons per year (T/a) LiFePO4/C production line

### Stage i. Demagnetization of primary, secondary and excipient precursors

The primary precursors FePO4 4,000 T, Li2CO 900 T, isomaltose (C12H22O11) 300 T and 30 5 T of immobilized cytochrome (Cu/Fe) nanoparticles or glucose nanoparticles dehydrogenase (GDH) or BCP (PEO-b-PBT)/MnSO4 2,500 T/2,500 T are demagnetized in a dry powder rotary iron demagnetizer (Steel

SUS304 stainless; Magnetic force of magnetic rod 12000 GS), including the demagnetizer a magnetic field measurement sensor and the demagnetizer to a corresponding control module. The components, once demagnetized, they are stored in corresponding silos.

### Stage ii. Feeding of primary, secondary and excipient precursors

Next, the different components are fed under a controlled atmosphere, in
powder form, to a disperser, gathering in the container container of the disperser and mixing through a continuous flow of purified water (500 l/min), being equipped the disperser of weight sensors, temperature measurement and recording, flow regulators of water and pressure, the disperser being associated with a control module corresponding that controls the temperature (which changes with the friction of the particles), the capacity of the glass, the dispersion time (60-90 min) and the speed of dispersion that achieves the homogeneity of the sludge by adjusting the initial values (1000-1500 rpm), for a desired particle surface area and viscosity, pumping the
sludge towards the next grinding operation.

The IIoT system facilitates in this operation the adjustment of the input flows of the components and purified water from the silos and a purified water tank at the disperser, measuring the weight proportions of the sludge, its homogeneity, the temperature and pressure in the different phases of the dispersion operation and the team turbulences at every moment. Likewise, the IloT System controls and manages the different components of the equipment such as steam extraction pumps water, gases and dusts, monitoring and controlling them, executing the procedures established alerts that help in decision making, improving the performance, effectiveness and safety of the operation as well as the quality of the sludge that passes to the grinding operations.

### Stage iii. Mechanical crushing of the resulting sludge

The sludge resulting from the dispersion is subjected to successive grinding phases where The components are mechanically crushed to obtain particles with a micrometric size and an ultra-fine and uniform final grind, which facilitates the quality of the 30 particles of the product
sludge in the subsequent sintering operation and the finalization of the product according to the electrochemical properties that are determined. need for
cathodes of LFP batteries.

The grinding of the components is carried out in two phases. The first phase or Coarse grinding occurs in a feedback circuit of three grinding tanks, stirring and mixing, with heating jacket and cooling circuit at temperature constant, until obtaining particles of size 1-10 µm. The classified sludge according to their size and coming from the dispersion stage are pumped, pulverized and projected for cyclic mixing. Later, when the
particles reach the set size, corresponding extraction pumps are those responsible for transporting the sludge to the second phase or grinding circuit fine. The second phase or fine grinding is also carried out cyclically to obtain a particle size of 0.8-1.8 µm. The sludge product of this grinding is
demagnetized in a similar way to step i) and pumped for the operation of spray drying.

The IloT System, through a control module associated with the grinding stage, controls and manages the flows of pulverized sludge to the mills, the states of nozzles, grinding material balancing in mills, vibration frequency in
particle separation and stirring speed, recycling of particles in suspension, pressure control and pumping direction in the different valves, flow, the pressure of the different circuits, the thermostats and temperatures, size of particles, stirring speed, overflow control, particle emission or
noise emission as the most important parameters. Completed the operation of fine grinding, the IIoT system controls and manages the demagnetization of the sludge and the surface state of the particles before entering the drying operation aspersion. With the passage of the fine sludge through a rotary demagnetizer, at the adequate temperature, they lose the magnetic properties acquired during the
grind. Furthermore, the IIoT system guarantees that maintenance or suspension of any equipment component will not affect the production process and therefore ensures continuous, more efficient production without downtime.

### Stage iv. Spray drying

Spray drying is the technique used to dry the sludge from fine grinding, once demagnetized. Spraying manages to deagglomerate the particles and improve the sintering operation. The demagnetized fine sludge is pumped through diaphragm pumps to a drying tower or tanker (Evaporation capacity 200 kg/h, fluidized bed support, high torque motor with double extension shaft. Material Steel SUS304) for dispersion, drying and transport of the dried particles to the reactors where the sintering operation takes place. The dispersion of sludge in the drying tower is carried out by peristaltic pumps that pulverize the incoming sludge. Compressed hot air to drying occurs in a heat exchanger (recovered vapor heat) and enters
the cistern, in the opposite direction to the sludge. The spray drying stage eliminates the moisture from the sludge, generating a dry powder, with the particles resulting from the grinding with established, adjusted size, surface structure and degree of humidity and managed by the IloT System. To achieve this, this drying stage is associated with a control module that manages and optimizes, at all times, the capacity and quality of desired evaporation for the process, the entry velocity of sludge, air hot and suspended powders inside the drying tower; the pressure of reduction of incoming dusts and compressed air; the temperature of the powders outlet, the state of the nozzles, the circulation of the powders inside the tower, their contact with hot air and the final demagnetization level of the drying process
by sprinkling. Once the spray drying operation is completed, the dried powders, loose and demagnetized are prepared for the sintering operation.

### Stage v. Sintering

The sintering process is a cyclic process that is carried out until granules are obtained. complete LiFePO4/C. This operation consists of heating the powders
dried in rotary roller kilns for continuous, two-wire sintering, both always with a controlled inert atmosphere, at a temperature around 75% of that of fusion of powders. When sintering occurs, the powders from the spray-dried form a bonded, non-melting particle structure covered in
a surface layer that integrates them as new LiFePO4/C particles. Is obtained thus pressing LiFePO4/C metal powders into molds. The operation of Sintering is carried out, in parallel, on continuous rotary ball furnaces, with three chambers or atmospheres:
- purge chamber or excipient prechamber: the powders are preheated for a period of 4-6 hours, eliminating the binders. The contact between particles grows, the first bridges or necks appearing between the particles;
- high temperature chamber: the union of the particles of
   compacted by diffusion in solid state. At a constant temperature of 750 °C, for a period of 8-10 hours. In this stage the structures are defined to obtain surface density and the properties of a sintered compact. During this phase, the inter-particle necks grow so that the particles They lose their individuality, grow in size and a network of pores forms. connected with the surface;
- cooling chamber: the temperature of the product is lowered sintered, finishing the formation of the particle structure. The time of cooling is 6 to 8 hours. The objective of the operation teams sintering is to produce LiFePO4/C particles with a size structure defined and controlled by the IIoT system, which establishes these properties of according to the needs of the cathode material.

The IIoT system controls, manages and optimizes the sintering capacity of the operation. To do this, this sintering stage is associated with a control module that controls and manages, throughout the entire operation, the temperatures of each
chamber and the output products of each of them; the inert state in each camera; the inert gas inlet pressure; the entry speed of the powders into each camera; the residence time of the particles in each chamber, the state and evolution of the formation of the LiFePO4/C granules through the different chambers.

### Stage vi. Sieving and grinding

The LiFePO4/C powders from sintering are sieved, crushed and dry molded, under an inert atmosphere. An in-line fluidized bed air jet mill grinds the powders until they reach the desired ultrafine size (1-12 µm) and a metallographic structure of the particles appropriate to that required for the production of an active cathode material. A storage tank collects the 25 final size particles that will go into the batch mixing process. Those

Particles that do not have the proper size and/or the desired structure are

They feed back to the jet mill.

The sieving and grinding equipment has switches, safety valves and adequate breathing and managed by the IIoT System, which controls each moment, through a control unit associated with this stage, the parameters of sieving and grinding of LiFePO4/C particles, such as temperature, powder flow rate, air jet pressure, size and surface structure of the particles, the output flows of the powders, the weight and condition of the powders, as well as such as the condition of the equipment components and the work atmosphere.

### Stage vii. Mixed under an inert atmosphere until the degree of homogeneity is achieved and desired purity, demagnetization and final sieving

LiFePO4/C powder (4-4.5% Li; 34-36% Fe; 19-21% P; 1.3 ± 0.2% C; Cu < 0.005% /Mn < 0.005%; H2O (ppm) ÿ 1,000, 1-12 µm) is pumped to a mixer horizontally in batches in buckets, under an inert atmosphere, and mixed until the degree of homogeneity and purity for the product that is required to be used as cathode material of the secondary battery cells and defined in the IIoT system. He batch mixing preserves the quality of the shape, the homogeneity, the state of the particles and their efficient distribution.

The resulting product passes, in continuous flow and under an atmosphere with humidity control, to a final stage of demagnetization. Any residual magnetic flux is removed. interferes with the electrochemical properties of LiFePO4/C as a cathode material.

Finally, the LiFePO4/C powders undergo a final screening with sieves ultrasonic vibration, eliminated particles with a size greater than established on the Product Quality Sheet D95 <10 µm, D50 2-6 µm, D10 <1.5 µm and which is registered and managed in the IIoT system.

The IIoT system, through a controller associated with this stage, controls and manages, in each moment, the status and evolution of the mixing operation in each of buckets, controls and manages the granularity and homogeneity of the product, the state safety and the working atmosphere, the inlet pressure of the inert gas and the state of the equipment, as well as the demagnetization and final sieving, adapting parameters such as dimension, amplitude, vibration frequency in relation to density, size and structure of the particles and the state of the equipment components.

## Claims

1. Industrial process for producing lithium iron phosphate from iron phosphate (FePO4) and lithium carbonate (Li2CO3), as primary precursors, nanoparticles natural carbohydrates selected from isomaltose, galactose, sucrose, fructose or glucose, as secondary precursors or carbon doping additives, as well as a excipient selected from immobilized cytochrome (Cu/Fe) nanoparticles, immobilized glucose oxidase (GOx) nanoparticles, glucose nanoparticles immobilized dehydrogenase (GDH) or oxide block copolymer nanoparticles polyethylene-polybutylene terephthalate (PEO-b-PBT), carbon nanofibers (CNF), manganese sulfate (MnSO4) or combinations thereof, consisting of process in the following stages:
Yo. Demagnetization pretreatment of primary precursors,
secondary precursors and excipients;
ii. Feeding of the primary and secondary precursors and excipients in the form of powder to dispersion equipment along with a continuous flow of purified water to obtain a slurry of homogenized particles, maintaining the
temperature between 60 °C and 70 °C to avoid degradation, for 60-90 minutes, at 1,000-1,500 rpm; this feeding stage being controlled by an IIoT system that adjusts the input flows of precursors and water purified to the disperser, it measures the weight proportions of the sludge, its homogeneity, temperature and pressure, and turbulence of the equipment in each moment;
iii. Mechanical crushing of the resulting sludge in two successive grinding phases:
coarse grinding to obtain a particle size of 1-10 µm and fine grinding to obtain a particle size of 100-200 nm; controlling the crushing stage through an IIoT system that manages sludge flows
pulverized, states of crushing equipment, balancing of grinding material or particle size;
iv. Demagnetization, spray drying of fine sludge and demagnetization; This stage is controlled by an IIoT system that manages and optimizes at all times the desired evaporation capacity and quality, the entry speed of sludge, hot air and suspended powders, and the final demagnetization level of the drying process. by sprinkling;
v. Sintering through a first heating for 4-6 hours, eliminating
the excipients and the first bridges or necks between particles appear, a second heating at 750 °C for 8-10 hours, producing the union of compacted particles by diffusion in solid state, the inter-necks particle grow so that the particles lose their individuality and form a network of connected pores, and finally cooling for 6-8 hours;
This stage is controlled by an IloT system that manages the temperatures, the residence time of the particles at each temperature, the state and formation evolution of LiFePO4/C granules.
saw. Sieving and grinding to a size of 1-12 µm using grinding equipment
that has adequate switches, safety and breathing valves and managed by an IIoT system that controls, at all times, the parameters grinding speed, temperature, powder flow rate, size and structure surface of the particles; as well as the state of the equipment components.
vii. Mixed under an inert atmosphere until the degree of homogeneity and purity is achieved.
desired, magnetic treatment and final sieving; controlling this stage through an IloT system that manages, at all times, the status and evolution of the mixing operation, granularity, homogeneity and magnetization of the product and the state of the equipment.

2. Industrial process for the production of lithium iron phosphate according to claim 1, characterized because the primary, secondary precursors and excipients are fed
in stage ii) of the process described above in the following proportions, with respect to by weight:
| | % in weigh | Size |
|---|---|---|
| Primary precursors: | 74-75 | |
| FePO4 | | |
| Li2CO3 | | |
| Secondary precursors: | 17-18 | |
| nanoparticles of isomaltose, galactose, sucrose, fructose or glucose | 6 - 7 | |
| Excipients: | | |
| | 0.5 - 1 | 50-200nm |
| immobilized cytochrome (Cu/Fe) nanoparticles, immobilized glucose oxidase (GOx), immobilized glucose doefhydrogenase (GDH) nanoparticles, PEO-b-PBT (BCP) nanoparticles, nanofibers CNF, MnSO4 or their combinations | | 10-100nm |

3. Industrial process for the production of lithium iron phosphate according to claim 1 or 2, **characterized in that** the secondary precursor used consists of nanoparticles.
of isomaltose and the excipient used is a combination of immobilized 5-cytochrome (Cu/Fe) nanoparticles, immobilized glucose oxidase (GOx) nanoparticles, immobilized glucose dehydrogenase (GDH) nanoparticles, or PEO-b-PBT (BCP) nanoparticles, and MnSO4.

4. System for carrying out the process according to claims 1 to 3,
characterized because, for each stage of the process, a control module associated with corresponding physical sensing elements define and control the parameters input and output of the data collected by said detection elements and sends them to a data processing station associated with each process stage, all of which are the data stations associated with a master station capable of taking
decisions and give responses according to the status of each stage of the process, assessing the need to modify, restore or respond to certain events, all of this
using industry standard communication protocols.
